(19) **Europäisches Patentamt**

**European Patent Office**

**Office européen des brevets**

(11) **EP 1 366 579 B1**

(12) **EUROPEAN PATENT SPECIFICATION**

(45) Date of publication and mention
of the grant of the patent:
**15.11.2006 Bulletin 2006/46**

(51) Int Cl.:
*H04B 7/06* (2006.01)

(86) International application number:
**PCT/EP2000/012269**

(21) Application number: **00987355.5**

(22) Date of filing: **06.12.2000**

(87) International publication number:
**WO 2002/047286 (13.06.2002 Gazette 2002/24)**

(54) **METHOD FOR CONTROLLING THE WEIGHTING OF A DATA SIGNAL IN THE AT LEAST TWO ANTENNA ELEMENTS OF A RADIO CONNECTION UNIT, MODULE AND COMMUNICATIONS SYSTEM**

VERFAHREN ZUM REGELN DER GEWICHTE EINES DATENSIGNALS IN MINDESTENS ZWEI ANTENNENELEMENTEN EINER FUNKVERBINDUNGSEINHEIT, MODULS UND KOMMUNIKATIONSSYSTEMS

PROCEDE DE COMMANDE DE PONDERATION D'UN SIGNAL DE DONNEES DANS AU MOINS DEUX ELEMENTS D'ANTENNE D'UNE UNITE DE CONNEXION RADIO, UNITE DE CONNEXION RADIO, MODULE D'UNITE DE CONNEXION RADIO ET SYSTEME DE COMMUNICATION RADIO

(84) Designated Contracting States:
**AT BE CH CY DE DK ES FI FR GB GR IE IT LI LU MC NL PT SE TR**

(43) Date of publication of application:
**03.12.2003 Bulletin 2003/49**

(73) Proprietor: **Nokia Corporation**
**02150 Espoo (FI)**

(72) Inventors:
 • HOTTINEN, Ari
 FIN-02320 Espoo (FI)
 • WICHMAN, Risto
 FIN-00510 Helsinki (FI)
 • TIRKKONEN, Olav
 FIN-00720 Helsinki (FI)

(74) Representative: **Schippan, Ralph**
**COHAUSZ & FLORACK**
**Patent- und Rechtsanwälte**
**Bleichstrasse 14**
**40211 Düsseldorf (DE)**

(56) References cited:
 EP-A- 0 605 119         WO-A-00/36764
 WO-A-00/72464          WO-A-98/09381
 US-A- 6 067 324

 • "Advanced closed loop Tx diversity concept (eigenbeamformer)", 3GPP TSG RAN WG 1, TSGR1#14(00)0853, 4.-7. July 2000, Oulu, Finnland, by Siemens XP002169992 cited in the application
 • FARROKHI F R ET AL: "Link-optimal BLAST processing with multiple-access interference" VEHICULAR TECHNOLOGY CONFERENCE FALL 2000. IEEE VTS FALL VTC2000. 52ND VEHICULAR TECHNOLOGY CONFERENCE (CAT. NO.00CH37152), VEHICULAR TECHNOLOGY CONFERENCE FALL 2000. IEEE VTS FALL VTC2000. 52ND VEHICULAR TECHNOLOGY CONFERENCE, BOSTON, MA, USA, 24-28, pages 87-91 vol.1, XP002170648 2000, Piscataway, NJ, USA, IEEE, USA ISBN: 0-7803-6507-0 cited in the application

**Description**

FIELD OF THE INVENTION

The invention relates to a method for controlling the weighting of a data signal in the at least two antenna elements of a first radio connection unit of a radio communications system, which data signal is to be distributed to at least two beams for parallel transmission of the data signal in at least two at least partly different streams to a second radio connection unit with at least one antenna element, the beams being formed by weighting the data signal in the antenna elements with a set of weights for each beam. The invention equally relates to a radio connection unit, a radio connection unit module and a radio communications system to be employed for such a method.

BACKGROUND OF THE INVENTION

It is known from wireless communications systems of the state of the art to transmit data signals between two radio connection units, in particular from a base station to a terminal, in parallel via several transmit antenna elements. When using multiple antennas with adapted transmission and detection techniques, the spatial dimension can be exploited at the terminal and the spectral efficiency of fading wireless channels can be increased significantly compared to conventional single antenna links. A terminal receiving signals from such a transceiver can be designed to distinguish several channels, if they are sufficiently uncorrelated.

The document "Link-Optimal BLAST Processing With Multiple-Access Interference" by F.R. Farrokhi, G.J. Foschini, A. Lozano, R.A. Valenzuela, Bell Laboratories (Lucent Technologies) in IEEE Vehicular Technology Conference, Boston, Massachussets, USA, Sept. 24-28, 2000, proceeds from a wireless communications system with antenna arrays at both, transmitter and receiver. The system transmits parallel data streams simultaneously and in the same frequency band, using the multiple antennas. With rich propagation, the different streams can be separated at the receiver because of their distinct spatial signatures. It is proposed to make the channel and the interference covariance available to the transmitter. The transmitter finds the channel eigenmodes in the presence of the interference and sends multiple independent data streams through those eigenmodes. The total transmitted power is distributed among the eigenmodes according to an optimal water-fill process. Thereby, the maximised capacity is supposed to be achieved. The method, as described above, always assumes that the receiver has at least two antenna elements. Preferably, in the aforementioned concept, the number of transmit and receive elements is the same.

The parallel transmission via a plurality of antenna elements in transceiver and terminal enables a reduction of Eb/No (Eb = energy per bit; No = noise power density per Hz) requirements for achieving data rates associated with higher order constellations like 8PSK, 16QAM, or 64QAM. Moreover, it enables the expansion of the number of rate options for adaptive modulation and coding (AMC) and an increase of the maximum rate.

SUMMARY OF THE INVENTION

It is an object of the invention to provide a further improved method for controlling the weighting of a data signal in the at least two antenna elements of a transceiver of a wireless communications system which allows for high data rates in the downlink matched to channel conditions.

This object is reached on the one hand by a method as defined in appended claim 1.

With regard to this method, the invention proceeds from the idea that the second radio connection unit is in possession of the most comprehensive information relevant for selecting suitable beams for transmission of the data signal and for determining sets of weights for the selected beams. It is therefore proposed to calculate all relevant information needed for the weighting of the data signals in the antenna elements of the first radio connection unit already at the second radio connection unit. The feedback information includes a weight information from which the first radio connection unit can determine the set of weights for each beam that is to be used for transmission of the data signals from the first radio connection unit to the second radio connection unit. Each feedback information indicates the weighting of the data signal for each of the different antenna elements of the first radio connection unit. This way, the information needed for obtaining the weight sets can be determined with the full information present at the second radio connection unit, while only the information needed is fed back to the first radio connection unit.

It is to be noted that the feedback information can include the set of weights for each selected beam, the first radio connection unit only having to apply the received sets for forming the selected beams. It is not required, however, that the second radio connection unit determines and transmits all sets of weights, if there exists an a priori fixed or negotiated way of calculating multiple weights from a single feedback known to both, first and second radio connection unit. Then, a reduced feedback information is sufficient, which enables the first radio connection unit to determine the necessary sets of weights. Therefore, the second radio connection unit controls the parallel beams with weight information either directly using explicit feedback for all beams or implicitly using reduced feedback and the knowledge of beam

EP 1 366 579 B1

parameterisation at the first radio connection unit.

The method is aimed at controlling the weighting of a data signal that is to be divided, usually after encoding and modulation, into at least two parts for transmission. At least partly different symbols are therefore transmitted in parallel using the at least two formed beams, even though the symbols transmitted by the two beams do not have to be completely different.

The weight information for the selected beams and the number of beams respectively can be signalled to the first radio connection unit using any feasible technique known in the state of the art.

The transmitted data signals can be received at the second radio connection unit by one antenna element or by several antenna elements.

The above stated object of the invention is equally reached by a radio connection unit that can be used as first and/or as second radio connection unit, comprising means respectively for realising the method according to the invention. Moreover, the object is reached by radio connection unit modules comprising means for realising the method according to the invention in a first or second or a combined first and second radio connection unit. Finally, also a radio communications system with radio connection units suitable for realising the method according to the invention reaches this object of the invention.

Preferred embodiments of the invention become apparent from the subclaims.

In the method according to the invention, the second radio connection unit preferably determines the set of weights for at least two dominant downlink beams that are spatially sufficiently independent or uncorrelated for reception at said second radio connection unit. The sets of weights for forming the downlink beams that are fed back to the first radio connection unit can be calculated at the second radio connection unit so that they enable an efficient signal separation at the receiver. As an example, if the two most dominant beams are highly correlated, the first radio connection unit and the second radio connection unit can use only one of them for an efficient parallel transmission. In this case, only one of those most dominant beams is used and in addition another dominant beam with a smaller eigenvalue but which is sufficiently different from the two most dominant beams. With sufficient information about the beamforming at the first radio connection unit, again, instead of all needed sets of weights only some reduced weight information from which several sets of weights can be determined can be transmitted to the first radio connection unit as feedback information.

In a further preferred embodiment of the proposed method, the second radio connection unit not only determines the downlink beams and the corresponding weight information indicating the sets of weights that are to be used for multiple transmission, but also the data rates to be used for each of the selected beams. The data rates are determined in the second radio connection unit according to the characteristics of the received channels and information about the determined data rates is transmitted to the first radio connection unit. This means, the data rate mapping to multiple beams is done at least partially using a second radio connection unit to first radio connection unit feedback. Thereby, the downlink data rate using multiple transmit beams or weight sets can be maximised. In order to be able to assign the data rates, the signal-to-noise ratio (SNR) or signal-to-interference ratio (SIR), or signal-to-noise-plus-interference ratio (SINR) of the different channels can be evaluated. Moreover, with correlated channels, the data rate should typically be reduced regardless of the number of transmit or receive antenna elements. The data rates can be determined in a way that the total data rate remains constant. Advantageously, however, the total data rate is determined in a way that it coincides with a data rate requested by the terminal and that the associated transmission power supports the quality-of-service (QoS) criteria (e.g. SIR, SNR, SINR, Bit Error Ratio BER, Frame Error Rate FER, Outage) set for the transmitted service by the terminal.

The information about changes in the data rates transmitted from the second to the first radio connection unit can be differential or absolute. In the first case, e.g. only a requested increase or decrease in a data rate has to be indicated in the feedback, while in the second case, the data rate can change arbitrarily, but more feedback is required.

The determination of multi-rate beams is preferably done in the second radio connection unit by taking into account the effective signal-to-noise ratio for parallel beams and by using in addition the knowledge of the receiver structure in the second radio connection unit. For example, some receivers can be better suited for mitigating inter-beam interferences than others. Furthermore, the inter-beam interference can be optimised when controlling jointly the transmit powers, weight coefficients and data rates.

In an equally preferred embodiment of the method according to the invention, the second radio connection unit determines alternatively or in addition to the data rate distribution an advantageous power distribution over the selected downlink beams. Like the data rates, also the power distribution is determined in the second radio connection unit according to the characteristics of the received channels. The second radio connection unit transmits information about this distribution to the first radio connection unit for controlling the antenna elements accordingly. Equivalent as for the data rates, the total power over all used beams can be kept constant.

The optimal power allocation can be determined in a way that the desired SIR is met after the sets of weights have been fixed. A downlink power assignment for the power of downlink beams with fixed beam coefficients from a base station to a number of terminals is described in "Optimal downlink power assignment for smart antenna systems" by Weidong Yang; Guanghan Xu, in Acoustics, Speech and Signal Processing, 1998; Proceedings of the 1998 IEEE, Vol. 6, pp. 3337-3340. This approach can be adapted for the method of the invention to be used to jointly determine the powers and the QoS parameters for each of several parallel downlink beams from a first radio connection unit to a given second radio connection unit rather than for the power of downlink beams from a base station to multiple users, where to each user there is assigned one beam.

Alternatively, the transmit powers for the downlink beams can be determined jointly with the determination of the set of weights or corresponding weight information for the optimal beams. In the document "Joint Optimal Power Control and Beamforming in Wireless Networks Using Antenna Arrays", by F. Rashid-Farrokhi, L. Tassiulas, and K. J. Ray Liu, IEEE Transactions On Communications, vol. 46, no. 10, October 1998, pp. 1313-1323, an algorithm is provided for computing transmission powers and beamforming weight vectors, such that a target SINR is achieved for each link from one base station to a plurality of terminals with minimal transmission power. In the documents, it is proposed that for a fixed power allocation, each base station maximises the SINR using the minimum variance distortionless response (MVDR) beamformer. Next, the mobile powers are updated to reduce the cochannel interference. This operation is done iteratively until the vector of transmitter powers and the weight coefficients of the beamformers converge to the jointly optimal value. Assuming that at least two spatial channels have been estimated for the second radio connection unit, the sets of weights and the power optimisation techniques proposed by Farrokhi et al. can be used in the method of the invention to determine multiple beams for parallel transmission from the first to the (single) second radio connection unit instead of from a base station to multiple users. As a result, the second radio connection unit has all relevant information for optimising the beams and for distributing the signals to at least two parallel beams.

Furthermore, for determining the at least two suitable downlink beams, channel information and/or interference information can be used in the second radio connection unit. A possibility for determining an interference covariance matrix that can be used in the method according to the invention to calculate the optimal eigenvectors at the second radio connection unit, is described e.g. in "Maximum Likelihood Multipath Channel Parameter Estimation in CDMA Systems", by C. Sengupta, A. Hottinen, J.R. Cavallaro, and B. Aazhang, 32nd Annual Conference on Information Sciences and Sysetms (CISS), Princeton, March 1998.

The weight information, which may include the sets of weights, and/or the data rates and/or the power distribution can be determined in the second radio connection unit either based on short term variations of the received channels or based on the stationary structure of the received channels or on a combination of both. In a slowly fading channel, short term variations can be used to determine the weight information and related data rate information. Alternatively, short term information can be used for signalling only the data rate and/or the power information for beams that are determined by using the stationary structure of the received channels. With short term variations, high resolution beams can be calculated such that the instantaneous data rate is maximised. This, of course, works only in slowly fading environments.

In case the stationary structure of the received channels is used for determining the weight information for the at least two downlink beams, preferably the eigenvectors of the spatial signal covariance matrices are calculated. However, the weight information for the preferred beams can be calculated in any other suitable way. For example, the subspace weight vectors can be tracked with a singular value decomposition and subspace tracking, which does not require the calculation of the correlation matrix and a subsequent eigenvalue decomposition. Such a tracking can be taken e.g. from "Solving the SVD Updating Problem for Subspace Tracking on a Fixed Sized Linear Array of Processors" by C. Sengupta, J.R. Cavallaro, and B. Aazhang, International Conference on Acoustics, Speech, and Signal Processing (ICASSP), Volume 5, pp. 4137-4140, Munich, April 1997. Alternatively, an independent component analysis can be applied, as described e.g. by J.F. Cardoso and P. Comon in: "Independent Component Analysis, a Survey of Some Algebraic methods", Proc. ISCAS Conference, volume 2, pp. 93-96, Atlanta, May 1996. In this case, the beams transmitted in parallel are typically non-orthogonal.

In one embodiment of the method according to the invention, the number of beams to be used can be determined first in the second radio connection unit and for this number of beams, sets of weights are determined and transmitted to the first radio connection unit, or the number is included in the weight information if this weight information does not include the complete set of weights to be used. The data signal may then be distributed in the first radio connection unit to the number of beams corresponding to the number of beams determined in the second radio connection unit. The second radio connection unit may determine the number of beams to be used for transmission of a data signal from the first radio connection unit to the second radio connection unit based on channel and/or interference information. The first radio connection unit can signal in addition to the number of beams beam indices selected for transmission, enumerated in some way.

Alternatively, the number of sets of weights determined in the second radio connection unit can be fixed.

In the method according to the invention, the second radio connection unit should recover the data signals distributed to the at least two beams in the first radio connection unit and transmitted in at least two at least partly different streams to the second radio connection unit. This means, the parts transmitted by different streams have to be combined again in the correct symbol/bit order.

In a preferred embodiment of method according to the invention, the first radio connection unit transmits weight information used for beamforming to the second radio connection unit and the second radio connection unit uses the received weight information for evaluation of the received data signals. With this knowledge, the quality and the speed in determining information to be transmitted to the first radio connection unit can be improved. In an alternative embodiment for the method of the invention, the second radio connection unit can make use of its own knowledge included in the weight information transmitted to the first radio connection unit for recovering the data signals. In both embodiments, the second radio connection unit can use the channel estimates obtained for each antenna element, the transport format information, and the used beam coefficients for each beam in order to detect and decode the information most efficiently. The receiver can use any techniques known in the art to that end, including joint detection, joint decoding, joint detection/ decoding and channel estimation implemented either iteratively, or non-iteratively. As an example, techniques analogous to those described in A. Hottinen and O.

Tirkkonen, "Iterative decoding and detection in a high data rate downlink channel," Proc. NORSIG, Kolmorden, Sweden, June 2000, can be used.

In the method of to the invention, the first radio connection unit can be a base station and the second radio connection unit a terminal, the formed beams being downlink beams. Equally, the first radio connection unit can be a terminal and the second radio connection unit a base station, the formed beams being uplink beams. Consequently, the method can also be employed with a base station and a terminal which can both form the first radio connection unit and the second radio connection unit.

The proposed method is of particular advantage when used in FDD systems.

The first and second radio connection units are preferably base stations and user equipments, where base station and user equipment can include either only means for one of the first and the second radio connection unit or means for both.


DETAILED DESCRIPTION OF THE INVENTION

In the following, the invention is explained in more detail for three embodiments.

All three embodiments of a method according to the invention relate to a WCDMA FDD wireless communications system, in which data signals are to be transmitted with a very high data rate from a base station to a user equipment. The base station comprises an antenna array with M antenna elements and the user equipment comprise an antenna array with N antenna elements. The data signals are transmitted in parallel and with the same frequency, but with different beams from the base station to the user equipment.

The beams are formed by assigning a different set of weights to the data signals assigned to one beam, the set of weights determining the weighting with which each data bit is transmitted from each antenna element of the base station. To each beam, there is assigned a data rate with which bits are to be transmitted and an output power. The number of beams to be used, the beam weights, the data rates and the power for the selected beams are determined in the user equipment.

The first embodiment of a method according to the invention is proposed for correlated spatial channels. A specific parameterised weight set for the base station antenna array is assumed. That is, it is assumed that the base station has an uniform linear array (ULA); the antennas have equal spacing, which spacing is small enough to allow significant (but not necessarily close to unit) correlation between neighbouring antennas. Under those assumptions, a particular parameterised beam-forming concept is used at the user equipment in which the transmit weight/array vector, parameterised by $\theta$, is given by:

$$w(\theta) = \left[ 1, e^{j\theta}, \ldots, e^{j(M-1)\theta} \right]^T / \sqrt{M}$$

The feedback can be calculated e.g. using the eigenvectors corresponding to the two largest eigenvalues of the channel matrix $H^H H$, where $H = (h_1, \ldots, h_M)$ and where $h_m$ is the impulse response between the $m^{th}$ array element and all antennas of the user equipment. When denoting these vectors by $e_{max\_i}$ (i = 1,2) and solving

$$\theta^* = \underset{\theta}{\text{argmax}} \left\| w(\theta)^H e_{max\_i} \right\|^2 ,$$

the phases at the transmit element m are $w_m = e^{j(m-1)\theta^*}$.

If the user equipment finds it advantageous, some (not necessarily orthogonal) linear combinations of the eigenvectors may be used as a basis for directing the beams from the ULA, instead of the eigenvectors $e_{max\_i}$. For example, if the data rates that may be assigned to the beams are such that the beam with the highest eigenvalue may support more data than can be transmitted with the highest supportable data rate, the user equipment may choose to select correlating beams, where a suitable mixture of orthogonal beams are used to reach the maximal data rate with an acceptable Quality of Service.

The set of parameters $\theta i$ for parallel transmission is fed back to the base station applying e.g. Mode 1 feedback signalling. In Mode 1, the feedback bit signals in successive slots the real and the imaginary parts of the feedback weights, or the angular parameters $\theta i$ in this case. It is also possible to parameterise the gains of the antennas with one or more parameters. One parameterisation would be to have the gains linearly increasing or decreasing along the linear array. Other parameterisation would enhance or suppress the central antenna elements, or every second element. If antenna gains are parameterised, the maximisation above chooses the best angular and gain parameters to match the eigenvectors. This information can be transmitted e.g. by closed-loop Mode 2 signalling. In closed-loop Mode 2, the feedback weight is signalled as a Gray coded message with 3 phase bits and 1 gain bit. The gain bit, transmitted every fourth slot, selects the relative gain between the two transmit elements. Here, Mode 2 signalling would convey information of the angular parameter $\theta i$ in the phase bits, and one gain parameter in the gain bit.

In addition, the feedback from the terminal to the transmitter can be reduced, if the terminal knows the method the transmitter uses in determining the coefficients for the parallel beams. For example, it is possible that the terminal sends the coefficients or parameters for one beam only, and the base station then determines two or more parallel beams using $w(\theta-\Delta)$ and $w(\theta+\Delta)$, where $\Delta$ is a priori fixed or negotiated between the transmitter and the terminal, and where $\theta$ is the parameter for the two beams. Then, the terminal can optimise $\theta$ jointly for $w(\theta-\Delta)$ and $w(\theta+\Delta)$, so that there are two parameterised beams transmitted, but with only one feedback signal ($\theta$). This generalises naturally to multiple parallel beams and different ways to calculate the multiple parallel beams from single feedback are possible.

In addition to the weight information, the user equipment determines the data rate to be used by each selected downlink beam. The data signal is to be distributed across the different downlink beams such that the target data rate R is met with minimal transmission power. This target rate may be chosen by the user equipment based on the channel and interference information available. The user equipment therefore assigns to N possible, not necessarily orthogonal beams, the data rates R1 to RN in a way that R = R1 + R2 + ... + RN = const. To this end, the signal-to-noise ratio SNR of the selected beams is evaluated. The selected dominant beam with the highest SNR is assigned the highest data rate and the selected dominant beam with the lowest SNR is assigned the lowest data rate. In addition, the correlation between the channels are taken into account. With high correlation, the data rate per selected beam is reduced, as the supportable (target) data rate has to be decreased. The data rates for the selected downlink beams are contained in additional feedback from the user equipment to the base station.

Equally included in such an additional feedback from the user equipment to the base station is information on the best power distribution for the different selected beams. The power can be assigned by the user equipment in a way that the total output power of the base station is constant, or minimised for a given data rate and quality of service requirement. Also for determining the power distribution, the channel characteristics are evaluated. For example, the lowest output power can be assigned to the selected dominant beam with the highest SNR. Transmitting information about the power distribution of different beams can be advantageously combined with transmitting the phase parameters $\theta i$, in feedback Mode 2 signalling. Now, the gain bit would indicate the relative gain of the beam in question, and the phase bits would convey information about the angular parameters $\theta i$. Similarly, data rate information can be indicate by the gain bit in Mode 2 signalling.

The processes of choosing the data rates and choosing the power distribution can in some cases be considered complementary, i.e. the effect of using one may be partly generated by using the other.

The base station receives from the user equipment the feedback signals with a set of weights, the data rate and the output power for each selected downlink beam. These feedback information enables the base station to distribute, weight and transmit the data signals in the manner that was determined by the user equipment to be most suitable in the present situation.

The data signals to be transmitted by the base station are split in the base station to multiple downlink beams after channel encoding so that different encoded bits are transmitted from different beams with the assigned power. For coding, e.g. Turbo coding is used and the bits are sequentially sent via the different beams, taking into account the different assigned data rates R1 to RM. Moreover, the bits are suitably interleaved across the spatial channels so that even if one channel or beam has a very low SNR, the data can be decoded. For example, random interleaving, or some optimised interleaving can be used. As an example, with rate 1/3 Turbo encoder that provides systematic bit (x0), parity bit 1 (x1) and parity bit 2 (x2), we can transmit x0 through at least two beams, x1 through beam 1 and x2 through beam 2. Thus, the encoded signal is distributed in at least two beams, with at least partially different contents. Each beam is formed by weighting the supplied encoded data bits in the antenna elements with the corresponding set of weights, which includes weight information for each antenna element for the specific beam. At the terminal, the different parts of the data signals distributed to the different beams are combined again in order to obtain the correct symbol or bit order for channel decoding or for any other following receiver stage.

The second embodiment of the invention is based on an eigenanalysis of the long-term spatial-temporal covariance matrices estimated from the dominant temporal taps with a terminal that has N receive antenna elements. This approach is especially suited for deciding the number of beams to use when correlated spatial channels are expected.

The eigenbeams with the largest eigenvalues and therefore the largest average SNR are determined from the spatial-temporal correlation matrix. The dominant eigenvectors determined by the eigenanalysis are fed back to the base station as sets of weights for downlink beamforming. If the determined weights are fed back to the base station step by step, this process takes place roughly at the same time scale as the physical movement of the user equipment. Such a forming of eigenbeams has been described in "Advanced closed loop Tx diversity concept (eigenbeamformer)", 3GPP TSG RAN WG 1, TSGR1#14(00)0853 Meeting #14, July 4-7, 2000, Oulu, Finland, by Siemens for selecting diversity transmission beams.

Before or in parallel with transmitting data signals, an orthogonal pilot sequence is transmitted from each base station antenna element to the user equipment. With the received signals, the user equipment is able to estimate the long term spatial covariance matrix R, or matrices $R_n$, of the dominant temporal taps. In the present case, where more than one receiving antenna element is used in the user equipment, the dimension of the correlation matrices is typically increased as compared to one receiving antenna element. Alternatively, the dimension can remain the same regardless of the number of receive antenna elements. In the latter case the receiver operations are simplified, and the correlation matrix for signals and channel coefficients received at different or selected receive antenna elements is given by

$$R = H^H * H$$

with $H = [h_1\ h_2\ ...\ h_M]$
where M is the number of transmit antenna elements and where $h_1$ (1=1...M) is a (NxL)x1 vector, a concatenation of N impulse response vectors of length L, where N is the number of receive antennas. For obtaining the weight vectors needed for beam forming, the terminal calculates two different vectors from this matrix R, e.g. the eigenvectors corresponding to the two largest eigenvalues of the matrix.

The aforementioned method averages the contributions of each path and receive antenna when calculating the correlation matrix, and subsequently for determining the transmit beam or beams based on the correlation matrix. Instead, it is possible to determine the transmit beam coefficients for each or for selected delay paths, or for selected receive antennas. To this end, multiple correlation matrices are calculated, where for calculating each correlation matrix a different combination of rows from channel matrix H is selected (i.e. a different set of row indices is selected when calculating the correlation matrix). Then, multiple weighting coefficients can be calculated, one corresponding to each row index set. By selecting suitable rows, the terminal can calculate weighting coefficients in a way that different parallel beams are optimised for different receive antennas or different multipath delays, or a combination of the two. Furthermore, the terminal can take into account the interference between the beams, thus effectively optimising the Signal-to-Interference ratio, rather than just the signal power. Notice that here it is sufficient for the terminal to have only one receive antenna, as long as there are at least two delay paths between the transmitter and the terminal.

Long-term properties can be exploited by calculating the weighting coefficients. Assume now that $h_n$ is an M-dimensional vector corresponding to the $n^{th}$ dominant tap, between M transmit elements and N receive antenna elements at delay path n. The long term channel properties change slowly over time, therefore a forgetting factor $\rho$ is applied to the long term spatial covariance matrix of the $n^{th}$ dominant temporal tap with the equation:

$$R_n(i) = \rho R_n(i-1) + (1-\rho) h_n(i) h_n^H(i),$$

where i denotes the slot number and $h_n$ the vector of spatial channel estimation of the $n^{th}$ temporal tap. By forming the eigenvectors, a decorrelation of the beamforming vectors can be achieved, and thereby a reduction in dimension for subsequent short-term processing and an improved short-term channel estimation at the user equipment enabled by an increase in diversity and antenna gain/interference suppression.

Proceeding from the estimated covariance matrices $R_n$, the terminal performs an eigenanalysis in order to determine the eigenvectors with the equation:

$$R_n W_n = W_n \Theta_n$$

for each dominant temporal tap. The eigenvectors to be found are columns of $W_n$. Since the matrix $\Theta_n$, which comprise the eigenvalues of matrices $R_n$, is diagonal by definition, transmission on different eigenbeams leads to uncorrelated fast fading. The diagonal entries of the matrix $\Theta_n$ indicate the long-term SNR of each beam. Here, a number of weighting vectors are defined, corresponding to the dominant eigenbeams, based different delay paths. Alternatively, the correlation matrix can be estimated for any other combination of row indices of H. For example, if all rows of H are selected, we need to track only one correlation matrix (average over multiple delay paths or receive antennas) and find at least two dominant eigenvectors or beams from a single matrix. The decision which delay paths and receive antenna paths are used can depend also on the receiver structure. However, the particular way the terminal decides to calculate the long term coefficients need not typically be known by the transmitter. The transmitter only needs to know the actual weighting coefficients that are applied in the transmitter in order to form the at least two beams.

With the calculation of the eigenvectors of the correlation matrices, an automatic adjustment to various propagation environments (spatially correlated or uncorrelated, frequency selective or non-selective) becomes possible. If the channel is spatially correlated, the channel can accurately be described by a small number of weighted eigenbeams. If, on the other hand, the channel has a spatial correlation of zero, no long-term spatial channel information can be exploited and each eigenvector addresses only one antenna element. Thus the user equipment determines from the eigenvalue spread the number of sufficiently independent spatial channels and signals the weight sets for the corresponding downlink beams to the base station. As in the first embodiment, the selected beams may be intentionally correlating, to fully exploit the capacity of the channel.

The sets of weights determined for forming the downlink beams are chosen in a way that they enable an efficient signal separation at the receiver. If the most dominant beams are highly correlated, the transceiver or the terminal can efficiently use only one of them for parallel transmission. In this case, in addition to one of those most dominant beams, another dominant beam with a smaller eigenvalue but which is sufficiently different from the two dominant beams, or a suitable linear combination of beams, is selected.

The data rates and the power used for the different selected downlink beams are determined in the user equipment and transmitted as separate feedback information to the base station, as described with reference to the first embodiment. Also the coding and interleaving of the data signals that are to be transmitted is carried out as described with reference to the first embodiment.

A third embodiment of a method according to the invention can be applied in cases where there are no long term spatial correlations.

The antenna elements are rather uncorrelated and the fading process may be rather fast. The only slowly changing characteristic is the rank of the channel matrix $H^H H$, i.e. the number of non-zero eigenvalues. With a frequency proportional to the expected or actual coherence time of the channel, the user equipment selects at least two beams that are linearly dependent on the eigenvectors related to at least two of the strongest eigenvalues.

As in the first and the second embodiment, the beams need not be orthogonal, and the feedback information may be supplemented with information about data rates and/or relative power distribution of the beams.

The weights corresponding to the selected beams are transmitted to the base station. For this, e.g. Mode 1 or Mode 2 signalling can be used, as explained in connection with the first and the second embodiment.

In the whole, in all three embodiments, all necessary processing for establishing an optimised feedback downlink transmission in a base station with multiple transmission is carried out in the user equipment, the base station only applying the received information.

Finally, it should be noted that the same methods may be applied to uplink transmissions in personal communication systems, or more generally, to any radio communication link with multiple input, multiple (or single) output channels, where a reciprocal channel exists that enables feedback signalling.

**Claims**

1. Method for controlling the weighting of a data signal in the at least two antenna elements of a first radio connection unit of a radio communications system, which data signal is to be distributed to at least two beams for parallel transmission of the data signal in at least two at least partly different streams to a second radio connection unit with at least one antenna element, the beams being formed by weighting the data signal in the antenna elements with a set of weights for each beam, the method comprising:

- determining in the second radio connection unit a weight information enabling the first radio connection unit to determine the sets of weights for at least two suitable beams for transmission of a data signal from the first radio connection unit to the second radio connection unit;

- evaluating in the second radio connection unit the stationary structure of received channels for determining data rates to be used for each of the at least two suitable beams;

- transmitting the determined weight information and the determined data rates to the first radio connection unit; and

- distributing the data signal in the first radio connection unit to at least two sets of weights determined from the received weight information and transmitting the data signals simultaneously via the at least two formed beams with the determined data rates.

2. Method according to claim 1, wherein the second radio connection unit determines a weight information enabling the first radio connection unit to determine the set of weights for at least two dominant beams which allow a signal separation at said second radio connection unit.

3. Method according to claim 1 or 2, wherein the second radio connection unit determines the data rates to be used for the at least two determined beams.in a way that the total data rate is fixed.

4. Method according to claim 1 or 2, wherein the second radio connection unit determines the data rates to be used for the at least two determined beams in a way that the total data rate is met with minimal transmission power.

5. Method according to one of the preceding claims, wherein the second radio connection unit determines the power to be used for the at least two determined beams according to the channel characteristics and transmits information with the power to be used to the first radio connection unit.

6. Method according to claim 5, wherein the second radio connection unit determines the power to be used for the at least two determined beams in a way that the total power is constant.

7. Method according to one of the preceding claims, wherein channel and interference information is used in the second radio connection unit for determining the weight information enabling the determination of the sets of weights for the at least two suitable beams.

8. Method according to one of the preceding claims, wherein the short term variations in the received channels are evaluated in the second radio connection unit for determining the weight information and/or the data rates and/or the power to be used for each of the at least two suitable beams.

9. Method according to one of the preceding claims, wherein the stationary structure of the received channels is evaluated in the second radio connection unit for determining the weight information and/or the power to be used for each of the at least two suitable beams.

10. Method according to one of the preceding claims, wherein the weight information is determined by an eigenanalysis of spatial covariance matrices representing the stationary structure of the received channels.

11. Method according to one of the preceding claims, wherein the stationary structure of the received channels is used in the second radio connection unit for determining the weight information and wherein short term variations in the received channels are used in the second radio connection unit in addition for determining the data rates and the power to be used for said beams.

12. Method according to one of the preceding claims, wherein the second radio connection unit recovers the data signals distributed to the at least two beams in the first radio connection unit and transmitted in at least two at least partly different streams to the second radio connection unit.

13. Method according to claim 12, wherein the second radio connection unit uses the weight information transmitted to the first radio connection unit for recovering the data signals.

14. Method according to claim 12, wherein the first radio connection unit transmits a weight information from which the second radio connection unit can determine the sets of weights used for transmission of the data signals to the second radio connection unit and wherein the second radio connection unit uses the weight information for recovering the data signals.

15. Method according to one of the preceding claims, wherein the second radio connection unit determines the number of beams to be used for transmission, the transmitted weight information comprising information about the number of beams to be used.

16. Method according to claim 15, wherein the second radio connection unit determines the number of beams to be used for transmission of a data signal from the first radio connection unit to the second radio connection unit based on channel and/or interference information.

17. Method according to one of the preceding claims, wherein the first radio connection unit is a base station and the second radio connection unit a user equipment and wherein the formed beams are downlink beams.

18. Method according to one of the preceding claims, wherein the first radio connection unit is a user equipment and the second radio connection unit a base station and wherein the formed beams are uplink beams.

19. Use of a method according to one of claims 1 to 18 in a WCDMA FDD system.

20. Radio connection unit module for a first radio connection unit of a wireless communications system comprising means for controlling a weighting of a data signal in at least two antenna elements of the first radio connection unit, which data signal is to be distributed to at least two beams for parallel transmission of the data signal in at least two at least partly different streams to a second radio connection unit with at least one antenna element,

- wherein said means are adapted to receive from the second radio connection unit a weight information and data rates to be used for each of the at least two suitable beams, said data rates being determined in the second radio connection unit by evaluating the stationary structure of received channels; and
- wherein said means are adapted to distribute the data signal to at least two sets of weights determined from the received weight information for at least two suitable beams, and to transmit the data signals simultaneously via the at least two formed beams with the determined data rates to the second radio connection unit.

21. Radio connection unit module according to claim 20, further comprising means for controlling the weighting of a data signal in the at least two antenna elements of a second radio connection unit, which data signal is to be distributed to at least two beams for parallel transmission of the data signal in at least two at least partly different streams to said first radio connection unit, the beams being formed by weighting the data signal in the antenna elements with a set of weights for each beam,

- wherein said means are adapted to determine a weight information enabling the second radio connection unit to determine the sets of weights for at least two suitable beams for transmission of a data signal from the other radio connection unit to said first radio connection unit;
- wherein said means are adapted to evaluate the stationary structure of received channels for determining data rates to be used for each of the at least two suitable beams; and
- wherein said means are adapted to transmit the determined weight information and the determined data rates to the second radio connection unit for enabling said second radio connection unit to distribute the data signal to at least two sets of weights determined from the received weight information and to transmit the data signals simultaneously via the at least two formed beams with the determined data rates.

22. Radio connection unit module according to one of claims 20 and 21, wherein the radio connection unit module is a base station module or a user equipment module.

23. Radio connection unit comprising at least two antenna elements and a radio connection unit module according to one of claims 20 to 22.

24. Base station comprising at least two antenna elements and a radio connection unit module according to one of claims 20 to 22.

25. User equipment comprising at least two antenna elements and a radio connection unit module according to one of claims 20 to 22.

**26.** Radio connection unit module for a first radio connection unit of a wireless communications system comprising at least one antenna element and means for controlling the weighting of a data signal in the at least two antenna elements of a second radio connection unit, which data signal is to be distributed to at least two beams for parallel transmission of the data signal in at least two at least partly different streams to said first radio connection unit, the beams being formed by weighting the data signal in the antenna elements with a set of weights for each beam,

- wherein said means are adapted to determine a weight information enabling the second radio connection unit to determine the sets of weights for at least two suitable beams for transmission of a data signal from the second radio connection unit to said first radio connection unit;
- wherein said means are adapted to evaluate the stationary structure of received channels for determining data rates to be used for each of the at least two suitable beams; and
- wherein said means are adapted to transmit the determined weight information and the determined data rates to the second radio connection unit for enabling said second radio connection unit to distribute the data signal to at least two sets of weights determined from the received weight information and to transmit the data signals simultaneously via the at least two formed beams with the determined data rates.

**27.** Radio connection unit module according to claim 26, wherein the radio connection unit module is a base station module or a user equipment module.

**28.** Radio connection unit comprising at least one antenna element and a radio connection unit module according to one of claims 26 and 27.

**29.** Base station comprising at least one antenna element and a radio connection unit module according to one of claims 26 and 27.

**30.** User equipment comprising at least one antenna element and a radio connection unit module according to one of claims 26 and 27.

**31.** Radio communications system, comprising at least one radio connection unit with means for realising as first radio connection unit the steps of the method according to one of claims 1 to 18 and at least one radio connection unit with means for realising as second radio connection unit the steps of the method according to one of claims 1 to 18.

**32.** Radio communications system according to claim 31, wherein the radio connection units used as first radio connection unit are base stations and/or user equipments.

**33.** Radio communications system according to claim 31, wherein the radio connection units used as second radio connection unit are base stations and/or user equipments.

**34.** Radio communications system according to one of claims 31 to 33, wherein at least one of the radio connection units comprises means for realising the steps of the method according to one of claims 1 to 18 as both, first and second radio connection unit.

**Patentansprüche**

**1.** Verfahren zum Regeln des Gewichtens eines, Datensignals in den mindestens zwei Antennenelementen einer ersten Funkverbindungseinheit eines Funkkommunikationssystems, wobei das Datensignal für die parallele Übertragung des Datensignals in mindestens zwei mindestens zum Teil verschiedenen Strömen zu einer zweiten Funkverbindungseinheit mit mindestens einem Antennenelement auf mindestens zwei Strahlenkeulen (beams) zu verteilen ist, wobei die Strahlenkeulen durch Gewichten des Datensignals in den Antennenelementen mit einem Satz von Gewichtungen für jede Strahlenkeule geformt werden, wobei das Verfahren umfasst:

- Bestimmen, in der zweiten Funkverbindungseinheit, von Gewichtungsinformationen, welche ermöglichen, dass die erste Funkverbindungseinheit die Sätze von Gewichtungen für mindestens zwei geeignete Strahlenkeulen zur Übertragung eines Datensignals von der ersten Funkverbindungseinheit zu der zweiten Funkverbindungseinheit bestimmt;
- Evaluieren, in der zweiten Funkverbindungseinheit, der stationären Struktur von empfangenen Kanälen zum Bestimmen von Datenraten, die zu verwenden sind, für jede der mindestens zwei geeigneten Strahlenkeulen;

- Übertragen der bestimmten Gewichtungsinformationen und der bestimmten Datenraten zu der ersten Funkverbindungseinheit; und
- Verteilen des Datensignals in der ersten Funkverbindungseinheit auf mindestens zwei Sätze von Gewichtungen, die aus den empfangenen Gewichtungsinformationen bestimmt wurden, und gleichzeitiges Übertragen der Datensignale über die mindestens zwei geformten Strahlenkeulen mit den bestimmten Datenraten.

2. Verfahren nach Anspruch 1, wobei die zweite Funkverbindungseinheit Gewichtungsinformationen bestimmt, welche ermöglichen, dass die erste Funkverbindungseinheit den Satz von Gewichtungen für mindestens zwei dominante Strahlenkeulen bestimmt, welche eine Signaltrennung an der zweiten Funkverbindungseinheit ermöglichen.

3. Verfahren nach Anspruch 1 oder 2, wobei die zweite Funkverbindungseinheit die Datenraten, die zu verwenden sind für die mindestens zwei bestimmten Strahlenkeulen, auf eine Weise bestimmt, dass die Gesamtdatenrate fest ist.

4. Verfahren nach Anspruch 1 oder 2, wobei die zweite Funkverbindungseinheit die Datenraten, die zu verwenden sind für die mindestens zwei bestimmten Strahlenkeulen, auf eine Weise bestimmt, dass die Gesamtdatenrate mit minimaler Sendeleistung erreicht wird.

5. Verfahren nach einem der vorangehenden Ansprüche, wobei die zweite Funkverbindungseinheit die Leistung, die zu verwenden ist für die mindestens zwei bestimmten Strahlenkeulen, gemäß den Kanaleigenschaften bestimmt und Informationen mit der zu verwendenden Leistung zu der ersten Funkverbindungseinheit überträgt.

6. Verfahren nach Anspruch 5, wobei die zweite Funkverbindungseinheit die Leistung, die zu verwenden ist für die mindestens zwei bestimmten Strahlenkeulen, auf eine Weise bestimmt, dass die Gesamtleistung konstant ist.

7. Verfahren nach einem der vorangehenden Ansprüche, wobei Kanal- und Interferenzinformationen in der zweiten Funkverbindungseinheit zum Bestimmen der Gewichtungsinformationen verwendet werden, welche die Bestimmung der Sätze von Gewichtungen für die mindestens zwei geeigneten Strahlenkeulen ermöglichen.

8. Verfahren nach einem der vorangehenden Ansprüche, wobei die kurzzeitigen Variationen in den empfangenen Kanälen zum Bestimmen der Gewichtungsinformationen und/oder der Datenraten und/oder der Leistung, die zu verwenden sind für jede der mindestens zwei geeigneten Strahlenkeulen, in der zweiten Funkverbindungseinheit evaluiert werden.

9. Verfahren nach einem der vorangehenden Ansprüche, wobei die stationäre Struktur der empfangenen Kanäle zum Bestimmen der Gewichtungsinformationen und/oder der Leistung, die zu verwenden sind für jede der mindestens zwei geeigneten Strahlenkeulen, in der zweiten Funkverbindungseinheit evaluiert wird.

10. Verfahren nach einem der vorangehenden Ansprüche, wobei die Gewichtungsinformationen durch eine Eigenanalyse von räumlichen Kovarianzmatrizen bestimmt werden, welche die stationäre Struktur der empfangenen Kanäle darstellen.

11. Verfahren nach einem der vorangehenden Ansprüche, wobei die stationäre Struktur der empfangenen Kanäle zum Bestimmen der Gewichtungsinformationen in der zweiten Funkverbindungseinheit verwendet wird und wobei kurzzeitige Variationen in den empfangenen Kanälen darüber hinaus zum Bestimmen der Datenraten und der Leistung, die zu verwenden sind für die Strahlenkeulen, in der zweiten Funkverbindungseinheit verwendet werden.

12. Verfahren nach einem der vorangehenden Ansprüche, wobei die zweite Funkverbindungseinheit die Datensignale, welche in der ersten Funkverbindungseinheit auf die mindestens zwei Strahlenkeulen verteilt wurden und in mindestens zwei mindestens zum Teil verschiedenen Strömen zu der zweiten Funkverbindungseinheit übertragen wurden, wiederherstellt.

13. Verfahren nach Anspruch 12, wobei die zweite Funkverbindungseinheit die Gewichtungsinformationen, die zu der ersten Funkverbindungseinheit übertragen wurden, zum Wiederherstellen der Datensignale verwendet.

14. Verfahren nach Anspruch 12, wobei die erste Funkverbindungseinheit Gewichtungsinformationen überträgt, aus welchen die zweite Funkverbindungseinheit den Satz von Gewichtungen bestimmen kann, der zur Übertragung der Datensignale zu der zweiten Funkverbindungseinheit verwendet wird, und wobei die zweite Funkverbindungseinheit die Gewichtungsinformationen zum Wiederherstellen der Datensignale verwendet.

15. Verfahren nach einem der vorangehenden Ansprüche, wobei die zweite Funkverbindungseinheit die Anzahl von Strahlenkeulen, die zur Übertragung zu verwenden sind, bestimmt, wobei die übertragenen Gewichtungsinformationen Informationen über die Anzahl von zu verwendenden Strahlenkeulen umfassen.

16. Verfahren nach Anspruch 15, wobei die zweite Funkverbindungseinheit die Anzahl von Strahlenkeulen, die für die Übertragung eines Datensignals von der ersten Funkverbindungseinheit zu der zweiten Funkverbindungseinheit zu verwenden ist, auf der Basis von Kanal- und/oder Interferenzinformationen bestimmt.

17. Verfahren nach einem der vorangehenden Ansprüche, wobei die erste Funkverbindungseinheit eine Basisstation und die zweite Funkverbindungseinheit ein Benutzerendgerät ist und wobei die geformten Strahlenkeulen Downlink-Strahlenkeulen sind.

18. Verfahren nach einem der vorangehenden Ansprüche, wobei die erste Funkverbindungseinheit ein Benutzerendgerät und die zweite Funkverbindungseinheit eine Basisstation ist und wobei die geformten Strahlenkeulen Uplink-Strahlenkeulen sind.

19. Verwendung eines Verfahrens nach einem der Ansprüche 1 bis 18 in einem WCDMA-FDD-System.

20. Funkverbindungseinheitsmodul für eine erste Funkverbindungseinheit eines drahtlosen Kommunikationssystems, umfassend Mittel zum Regeln eines Gewichtens eines Datensignals in mindestens zwei Antennenelementen der ersten Funkverbindungseinheit, wobei das Datensignal zur parallelen Übertragung des Datensignals in mindestens zwei mindestens zum Teil verschiedenen Strömen zu einer zweiten Funkverbindungseinheit mit mindestens einem Antennenelement auf mindestens zwei Strahlenkeulen zu verteilen ist,

    - wobei die Mittel ausgebildet sind, um von der zweiten Funkverbindungseinheit Gewichtungsinformationen und Datenraten, die zu verwenden sind für jede der mindestens zwei geeigneten Strahlenkeulen, zu empfangen, wobei die Datenraten in der zweiten Funkverbindungseinheit durch Evaluieren der stationären Struktur von empfangenen Kanälen bestimmt werden; und
    - wobei die Mittel ausgebildet sind, um das Datensignal auf mindestens zwei Sätze von Gewichtungen zu verteilen, die aus den empfangenen Gewichtungsinformationen für die mindestens zwei geeigneten Strahlenkeulen bestimmt wurden, und um die Datensignale gleichzeitig über die mindestens zwei geformten Strahlenkeulen mit den bestimmten Datenraten zu der zweiten Funkverbindungseinheit zu übertragen.

21. Funkverbindungseinheitsmodul nach Anspruch 20, ferner umfassend Mittel zum Regeln des Gewichtens eines Datensignals in den mindestens zwei Antennenelementen einer zweiten Funkverbindungseinheit, wobei das Datensignal zur parallelen Übertragung des Datensignals in mindestens zwei mindestens zum Teil verschiedenen Strömen zu der ersten Funkverbindungseinheit auf mindestens zwei Strahlenkeulen zu verteilen ist, wobei die Strahlenkeulen durch Gewichten des Datensignals in den Antennenelementen mit einem Satz von Gewichtungen für jede Strahlenkeule geformt werden,

    - wobei die Mittel ausgebildet sind, um Gewichtungsinformationen zu bestimmen, die ermöglichen, dass die zweite Funkverbindungseinheit die Sätze von Gewichtungen für mindestens zwei geeignete Strahlenkeulen zur Übertragung eines Datensignals von der anderen Funkverbindungseinheit zu der ersten Funkverbindungseinheit bestimmt;
    - wobei die Mittel ausgebildet sind, zum Bestimmen von Datenraten, die zu verwenden sind für jede der mindestens zwei geeigneten Strahlenkeulen, die stationäre Struktur von empfangenen Kanälen zu evaluieren; und
    - wobei die Mittel ausgebildet sind, die bestimmten Gewichtungsinformationen und die bestimmten Datenraten zu der zweiten Funkverbindungseinheit zu übertragen, um zu Ermöglichen, dass die zweite Funkverbindungseinheit das Datensignal auf mindestens zwei Sätze von Gewichtungen verteilt; die aus den empfangenen Gewichtungsinformationen bestimmt werden, und die Datensignale gleichzeitig mit den bestimmten Datenraten über die mindestens zwei geformten Strahlenkeulen überträgt.

22. Funkverbindungseinheitsmodul nach einem der Ansprüche 20 und 21, wobei das Funkverbindungseinheitsmodul ein Basisstationsmodul oder ein Benutzerendgerätmodul ist.

23. Funkverbindungseinheit, umfassend mindestens zwei Antennenelemente und ein Funkverbindungseinheitsmodul nach einem der Ansprüche 20 bis 22.

**24.** Basisstation, umfassend mindestens zwei Antennenelemente und ein Funkverbindungseinheitsmodul nach einem der Ansprüche 20 bis 22.

**25.** Benutzerendgerät, umfassend mindestens zwei Antennenelemente und ein Funkverbindungseinheitsmodul nach einem der Ansprüche 20 bis 22.

**26.** Funkverbindungseinheitsmodul für eine erste Funkverbindungseinheit eines drahtlosen Kommunikationssystems, umfassend mindestens ein Antennenelement und Mittel zum Regeln des Gewichtens eines Datensignals in den mindestens zwei Antennenelementen einer zweiten Funkverbindungseinheit, wobei das Datensignal zur parallelen Übertragung des Datensignals in mindestens zwei mindestens zum Teil verschiedenen Strömen zu der ersten Funkverbindungseinheit auf mindestens zwei Strahlenkeulen zu verteilen ist, wobei die Strahlenkeulen durch Gewichten des Datensignals in den Antennenelementen mit einem Satz von Gewichtungen für jede Strahlenkeule geformt werden,

- wobei die Mittel ausgebildet sind, um Gewichtungsinformationen zu bestimmen, die ermöglichen, dass die zweite Funkverbindungseinheit die Sätze von Gewichtungen für mindestens zwei geeignete Strahlenkeulen zur Übertragung eines Datensignals von der anderen Funkverbindungseinheit zu der ersten Funkverbindungseinheit bestimmt;
- wobei die Mittel ausgebildet sind, um zum Bestimmen von Datenraten, die zu verwenden sind für jede der mindestens zwei geeigneten Strahlenkeulen, die stationäre Struktur von empfangenen Kanälen zu evaluieren; und
- wobei die Mittel ausgebildet sind, die bestimmten Gewichtungsinformationen und die bestimmten Datenraten zu der zweiten Funkverbindungseinheit zu übertrage, um zu Ermöglichen, dass die zweite Funkverbindungseinheit das Datensignal auf mindestens zwei Sätze von Gewichtungen verteilt, die aus den empfangenen Gewichtungsinformationen bestimmt werden, und die Datensignale gleichzeitig mit den bestimmten Datenraten über die mindestens zwei geformten Strahlenkeulen überträgt.

**27.** Funkverbindungseinheitsmodul nach Anspruch 26, wobei das Funkverbindungseinheitsmodul ein Basisstationsmodul oder ein Benutzerendgerätmodul ist.

**28.** Funkverbindungseinheit, umfassend mindestens ein Antennenelement und ein Funkverbindungseinheitsmodul nach einem der Ansprüche 26 und 27.

**29.** Basisstation, umfassend mindestens ein Antennenelement und ein Funkverbindungseinheitsmodul nach einem der Ansprüche 26 und 27.

**30.** Benutzerendgerät, umfassend mindestens ein Antennenelement und ein Funkverbindungseinheitsmodul nach einem der Ansprüche 26 und 27.

**31.** Funkkommunikationssystem, umfassend mindestens eine Funkverbindungseinheit mit Mitteln zum Realisieren als erste Funkverbindungseinheit die Schritte des Verfahrens nach einem der Ansprüche 1 bis 18 und mindestens eine Funkverbindungseinheit mit Mitteln zum Realisieren als zweite Funkverbindungseinheit die Schritte des Verfahrens nach einem der Ansprüche 1 bis 18.

**32.** Funkkommunikationssystem nach Anspruch 31, wobei die Funkverbindungseinheiten, die als erste Funkverbindungseinheit verwendet werden, Basisstationen und/oder Benutzerendgeräte sind.

**33.** Funkkommunikationssystem nach Anspruch 31, wobei die Funkverbindungseinheiten, die als zweite Funkverbindungseinheit verwendet werden, Basisstationen und/oder Benutzerendgeräte.sind.

**34.** Funkkommunikationssystem nach einem der Ansprüche 31 bis 33, wobei mindestens eine der Funkverbindungseinheiten Mittel zum Realisieren der Schritte des Verfahrens nach einem der Ansprüche 1 bis 18 als sowohl erste wie auch zweite Funkverbindungseinheit umfasst.

**Revendications**

**1.** Procédé permettant de commander la pondération d'un signal de données dans les au moins deux éléments d'antenne d'une première unité de connexion radio d'un système de communication radio, ledit signal de données devant être distribué sur au moins deux faisceaux pour la transmission parallèle du signal de données dans au moins deux flots au moins partiellement différents à destination d'une seconde unité de connexion radio avec au moins un élément d'antenne, les faisceaux étant formés par la pondération du signal de données dans les éléments d'antenne avec une série de poids pour chaque faisceau, le procédé comprenant les étapes consistant à :

- déterminer dans la seconde unité de connexion radio une information de poids permettant à la première unité de connexion radio de déterminer les séries de poids pour au moins deux faisceaux adéquats pour la transmission d'un signal de données de la première unité de connexion radio à la seconde unité de connexion radio ;
- évaluer dans la seconde unité de connexion radio la structure immobile des canaux reçus pour déterminer les débits de données à utiliser pour chacun des au moins deux faisceaux adéquats ;
- transmettre l'information de poids déterminée et les débits déterminés à la première unité de connexion radio ; et
- distribuer le signal de données dans la première unité de connexion radio à au moins deux séries de poids déterminées à partir de l'information de poids reçue et transmettre les signaux de données simultanément par l'intermédiaire des au moins deux faisceaux formés avec les débits de données déterminés,

2. Procédé selon la revendication 1, dans lequel la seconde unité de connexion radio détermine une information de poids permettant à la première unité de connexion radio de déterminer la série de poids pour au moins deux faisceaux dominants qui permettent une séparation de signal au niveau de ladite seconde unité de connexion radio.

3. Procédé selon la revendication 1 ou 2, dans lequel la seconde unité de connexion radio détermine les débits de données à utiliser pour les au moins deux faisceaux déterminés de manière à ce que le débit de données total soit fixé.

4. Procédé selon la revendication 1 ou 2, dans lequel la seconde unité de connexion radio détermine les débits de données à utiliser pour les au moins deux faisceaux déterminés de manière à ce que le débit de données total soit atteint avec une puissance de transmission minimale.

5. Procédé selon l'une des revendications précédentes, dans lequel la seconde unité de connexion radio détermine la puissance à utiliser pour les au moins deux faisceaux déterminés selon les caractéristiques de canaux et transmet l'information avec la puissance à utiliser à la première unité de connexion radio.

6. Procédé selon la revendication 5, dans lequel la seconde unité de connexion radio détermine la puissance à utiliser pour les au moins deux faisceaux déterminés de manière à ce que la puissance totale soit constante.

7. Procédé selon l'une quelconque des revendications précédentes, dans lequel les informations de canaux et d'interférences sont utilisées dans la seconde unité de connexion radio pour déterminer l'information de poids permettant la détermination des séries de poids pour les au moins deux faisceaux adéquats.

8. Procédé selon l'une quelconque des revendications précédentes, dans lequel les variations à court terme des canaux reçus sont évaluées dans la seconde unité de connexion radio pour déterminer l'information de poids et/ou les débits de données et/ou la puissance à utiliser pour chacun des au moins deux faisceaux adéquats.

9. Procédé selon l'une quelconque des revendications précédentes, dans lequel la structure immobile des canaux reçus est évaluée dans la seconde unité de connexion radio pour déterminer l'information de poids et/ou la puissance à utiliser pour chacun des au moins deux faisceaux adéquats.

10. Procédé selon l'une quelconque des revendications précédentes, dans lequel l'information de poids est déterminée par une analyse de Eigen des matrices de covariance spatiale représentant la structure immobile des canaux reçus.

11. Procédé selon l'une quelconque des revendications précédentes, dans lequel la structure immobile des canaux reçus est utilisée dans la seconde unité de connexion radio pour déterminer l'information de poids et dans lequel les variations à court terme dans les canaux reçus sont utilisées dans la seconde unité de connexion radio en plus pour déterminer les débits de données et la puissance à utiliser pour lesdits faisceaux.

12. Procédé selon l'une quelconque des revendications précédentes, dans lequel la seconde unité de connexion radio récupère les signaux de données distribués aux au moins deux faisceaux dans la première unité de connexion radio et transmis dans au moins deux flots au moins partiellement différents à la seconde unité de connexion radio.

**13.** Procédé selon la revendication 12, dans lequel la seconde unité de connexion radio utilise l'information de poids transmise à la première unité de connexion radio pour récupérer les signaux de données.

**14.** Procédé selon la revendication 12, dans lequel la première unité de connexion radio transmet une information de poids à partir de laquelle la seconde unité de connexion radio peut déterminer les séries de poids utilisés pour la transmission des signaux de données à la seconde unité de connexion radio et dans lequel la seconde unité de connexion radio utilise l'information de poids pour récupérer les signaux de données.

**15.** Procédé selon l'une quelconque des revendications précédentes, dans lequel la seconde unité de connexion radio détermine le nombre de faisceaux à utiliser pour la transmission, l'information de poids transmise comprenant des informations sur le nombre de faisceaux à utiliser.

**16.** Procédé selon la revendication 15, dans lequel la seconde unité de connexion radio détermine le nombre de faisceaux à utiliser pour la transmission d'un signal de données de la première unité de connexion radio à la seconde unité de connexion radio sur la base des informations de canaux et/ou d'interférences.

**17.** Procédé selon l'une quelconque des revendications précédentes, dans lequel la première unité de connexion radio est une station de base et la seconde unité de connexion radio est un équipement d'utilisateur et dans lequel les faisceaux formés sont des faisceaux de liaison descendante.

**18.** Procédé selon l'une quelconque des revendications précédentes, dans lequel la première unité de connexion radio est un équipement d'utilisateur et la seconde unité de connexion radio est une station de base et dans lequel les faisceaux formés sont des faisceaux de liaison montante.

**19.** Usage d'un procédé selon l'une quelconque des revendications 1 à 18 dans un système WCDMA FDD.

**20.** Module d'unité de connexion radio pour une première unité de connexion radio d'un système de communication sans fil comprenant des moyens pour contrôler une pondération d'un signal de données dans au moins deux éléments d'antenne de la première unité de connexion radio, ledit signal de données devant être distribué à au moins deux faisceaux pour la transmission parallèle du signal de données dans au moins deux flots au moins partiellement différents à une seconde unité de connexion radio avec au moins un élément d'antenne,

- dans lequel lesdits moyens sont adaptés pour recevoir de la seconde unité de connexion radio une information de poids et des débits de données à utiliser pour chacun des au moins deux faisceaux adéquats, lesdits débits de données étant déterminés dans la seconde unité de connexion radio par l'évaluation de la structure immobile des canaux reçus ; et
- dans lequel lesdits moyens sont adaptés pour distribuer le signal de données à au moins deux séries de poids déterminés à partir de l'information de poids reçue pour au moins deux faisceaux adéquats, et pour transmettre les signaux de données simultanément par l'intermédiaire des au moins deux faisceaux formés avec les débits de données déterminés à la seconde unité de connexion radio.

**21.** Module d'unité de connexion radio selon la revendication 20, comprenant en outre des moyens pour contrôler la pondération d'un signal de données dans les au moins deux éléments d'antenne d'une seconde unité de connexion radio, ledit signal de données devant être distribué à au moins deux faisceaux pour la transmission parallèle du signal de données dans au moins deux flots au moins partiellement différents à ladite première unité de connexion radio, les faisceaux étant formés par pondération du signal de données dans les éléments d'antenne avec une série de poids pour chaque faisceau,

- dans lequel lesdits moyens sont adaptés pour déterminer une information de poids permettant à la seconde unité de connexion radio de déterminer les séries de poids pour au moins deux faisceaux adéquats pour la transmission d'un signal de données de l'autre unité de connexion radio à ladite première unité de connexion radio ;
- dans lequel lesdits moyens sont adaptés pour évaluer la structure immobile des canaux reçus pour déterminer les débits de données à utiliser pour chacun des au moins deux faisceaux adéquats ; et
- dans lequel lesdits moyens sont adaptés pour transmettre l'information de poids déterminée et les débits de données déterminés à la seconde unité de connexion radio pour permettre à la seconde unité de connexion radio de distribuer le signal de données à au moins deux séries de poids déterminés à partir de l'information de poids reçue et de transmettre les signaux de données simultanément par l'intermédiaire des au moins deux faisceaux formés avec les débits de données déterminés.

22. Module d'unité de connexion radio selon l'une des revendications 20 et 21, dans lequel le module d'unité de connexion radio est un module de station de base ou un module d'équipement d'utilisateur.

23. Unité de connexion radio comprenant au moins deux éléments d'antenne et un module d'unité de connexion radio selon l'une des revendications 20 à 22.

24. Station de base comprenant au moins deux éléments d'antenne et un module d'unité de connexion radio selon l'une des revendications 20 à 22.

25. Equipement d'utilisateur comprenant au moins deux éléments d'antenne et un module d'unité de connexion radio selon l'une des revendications 20 à 22.

26. Module d'unité de connexion radio pour une première unité de connexion radio d'un système de communication sans fil comprenant au moins un élément d'antenne et des moyens pour contrôler la pondération d'un signal de données dans les au moins deux éléments d'antenne d'une seconde unité de connexion radio, ledit signal de données devant être distribué à au moins deux faisceaux pour la transmission parallèle du signal de données dans au moins deux flots au moins partiellement différents à ladite première unité de connexion radio, les faisceaux étant formés par pondération du signal de données dans les éléments d'antenne avec une série de poids pour chaque faisceau,

- dans lequel lesdits moyens sont adaptés pour déterminer une information de poids permettant à la seconde unité de connexion radio de déterminer les séries de poids pour au moins deux faisceaux adéquats pour la transmission d'un signal de données de la seconde unité de connexion radio à ladite première unité de connexion radio ;
- dans lequel lesdits moyens sont adaptés pour évaluer la structure immobile des canaux reçus pour déterminer les débits de données à utiliser pour chacun des au moins deux faisceaux adéquats ; et
- dans lequel lesdits moyens sont adaptés pour transmettre l'information de poids déterminée et les débits de données déterminés à la seconde unité de connexion radio pour permettre à la seconde unité de connexion radio de distribuer le signal de données à au moins deux séries de poids déterminés à partir de l'information de poids reçue et de transmettre les signaux de données simultanément par l'intermédiaire des au moins deux faisceaux formés avec les débits de données déterminés.

27. Module d'unité de connexion radio selon la revendication 26, dans lequel le module d'unité de connexion radio est un module de station de base ou un module d'équipement d'utilisateur.

28. Unité de connexion radio comprenant au moins un élément d'antenne et un module d'unité de connexion radio selon l'une quelconque des revendications 26 et 27.

29. Station de base comprenant au moins un élément d'antenne et un module d'unité de connexion radio selon l'une quelconque des revendications 26 et 27.

30. Equipement d'utilisateur comprenant au moins un élément d'antenne et un module d'unité de connexion radio selon l'une quelconque des revendications 26 et 27.

31. Système de communication radio, comprenant au moins une unité de connexion radio avec des moyens pour réaliser en tant que première unité de connexion radio les étapes du procédé selon l'une quelconque des revendications 1 à 18 et au moins une unité de connexion radio avec des moyens pour réaliser en tant que seconde unité de connexion radio les étapes du procédé selon l'une quelconque des revendications 1 à 18.

32. Système de communication radio selon la revendication 31, dans lequel les unités de connexion radio utilisées en tant que première unité de connexion radio sont des stations de base et/ou des équipements d'utilisateur.

33. Système de communication radio selon la revendication 31, dans lequel les unités de connexion radio utilisées en tant que seconde unité de connexion radio sont des stations de base et/ou des équipements d'utilisateur.

34. Système de communication radio selon l'une quelconque des revendications 31 à 33, dans lequel au moins une des unités de connexion radio comprend des moyens pour réaliser les étapes du procédé selon l'une quelconque des revendications 1 à 18 en tant que à la fois première unité de connexion radio et seconde unité de connexion radio.